# EUROPEAN PATENT APPLICATION

(11) **EP 4 727 149 A1**
(43) Date of publication of application: **15.04.2026**
(21) Application number: 24826165.3
(22) Date of filing: 05.06.2024
(51) Int. Cl.: H04N 23/661, H04N 23/80, H04N 23/68, H04N 23/57, H04N 21/4363, H04N 21/41, H04N 21/64, H04N 23/63

(54) **METHOD FOR PROVIDING FEEDBACK INFORMATION FOR REMOTE PHOTOGRAPHING AND ELECTRONIC DEVICE THEREFOR**

(30) Priority: 23.06.2023 KR 20230081433; 27.07.2023 KR 20230098430
(71) Applicant: Samsung Electronics Co., Ltd., Suwon-si, Gyeonggi-do 16677 (KR)
(72) Inventor: JANG, Jongwoon, Suwon-si Gyeonggi-do 16677 (KR); KIM, Jiwon, Suwon-si Gyeonggi-do 16677 (KR); YOO, Nagyeom, Suwon-si Gyeonggi-do 16677 (KR); KIM, Bonghee, Suwon-si Gyeonggi-do 16677 (KR); LIM, Yujin, Suwon-si Gyeonggi-do 16677 (KR)
(74) Representative: Gulde & Partner
(86) International application number: PCT/KR2024/007697
(87) International publication number: WO 2024/262843

(57) **Abstract**

A method by which a foldable electronic device provides feedback information for remote photographing, according to various embodiments, may include a step for executing a camera application for photographing a subject through at least one camera of the foldable electronic device, a step for identifying whether a shaking state of the foldable electronic device is a stable state while a folding angle of the foldable electronic device is within a predetermined angle range, a step for determining the quality of an image by analyzing the image obtained through the at least one camera when the shaking state of the foldable electronic device is the stable state, a step for identifying at least one other electronic device connected to the foldable electronic device through short-range wireless communication, a step for generating feedback information about the image on the basis of a result of determining the quality, when the at least one other electronic device is identified, a step for selecting at least one feedback output device to output the feedback information from among the at least one other electronic device and transmitting the feedback information to the selected at least one feedback output device, and when the at least one other electronic device is not identified, a step for outputting the feedback information through the foldable electronic device.

## Description

### [Technical Field]

The disclosure relates to a method for providing feedback information for remote photographing and an electronic device therefor.

### [Background Art]

With the advancement of multimedia and network technologies, users have been able to get various services by utilizing a plurality of devices. In addition, when the user takes a photo by using an electronic device including a camera, the user have been able to control the photo taking by using another electronic device capable of remotely controlling the electronic device. However, there is an inconvenience that the user must directly check on the electronic device so as to check a resultant captured image after remotely taking the photo using the electronic device. Furthermore, there is a problem that it is difficult to effectively get a feedback of an image obtained through the camera of the electronic device when the user uses various external electronic devices (e.g., wearable electronic devices).

The above-described information may be provided as related art for the purpose of helping understanding of the disclosure. No claim or determination is made as to whether any of the above-described contents may be applied as prior art related to the disclosure.

### [Disclosure of Invention]

### [Technical Problem]

A method for providing feedback information for remote photographing in a foldable electronic device of an embodiment of the disclosure may include the operation of executing a camera application for photographing a subject through at least one camera of the foldable electronic device, may include the operation of identifying whether a shaking state of the foldable electronic device is a stable state while a folding angle of the foldable electronic device is within a predefined angle range, may include the operation of when the shaking state of the foldable electronic device is the stable state, analyzing an image obtained through the at least one camera and determining the quality of the image, may include the operation of identifying at least one other electronic device connected to the foldable electronic device through short-range wireless communication, may generate feedback information about the image, based on a result of determining the quality, may include the operation of when the at least one other electronic device is identified, selecting at least one feedback output device from among the at least one other electronic device and the operation of transmitting the feedback information to the selected at least one feedback output device, and may include the operation of when the at least one other electronic device is not identified, outputting the feedback information through the foldable electronic device.

A foldable electronic device for providing feedback information for remote photographing of an embodiment of the disclosure may include at least one camera, a memory, a wireless communication circuit, and at least one processor operatively connected to the camera, the memory and the wireless communication circuit. By executing instructions stored in the memory, the at least one processor may execute a camera application for photographing a subject through the at least one camera of the foldable electronic device, may identify whether a shaking state of the foldable electronic device is a stable state while a folding angle of the foldable electronic device is within a predefined angle range, may analyze an image obtained through the at least one camera and determine the quality of the image when the shaking state of the foldable electronic device is the stable state, may identify at least one other electronic device connected to the foldable electronic device through short-range wireless communication, may generate feedback information about the image, based on a result of determining the quality, may select at least one feedback output device from among the at least one other electronic device when the at least one other electronic device is identified, may transmit the feedback information to the selected at least one feedback output device, and may output the feedback information through the foldable electronic device when the at least one other electronic device is not identified.

A computer-readable recording medium recording a program for executing a method of an embodiment of the disclosure may be provided wherein the method includes the operation of executing a camera application for photographing a subject through at least one camera of an electronic device , the operation of identifying whether a shaking state of the foldable electronic device is a stable state while a folding angle of the foldable electronic device is within a predefined angle range, the operation of analyzing an image obtained through the at least one camera and determining the quality of the image when the shaking state of the foldable electronic device is the stable state, the operation of identifying at least one other electronic device connected to the foldable electronic device through short-range wireless communication, the operation of generating feedback information about the image, based on a result of determining the quality, the operation of when the at least one other electronic device is identified, selecting at least one feedback output device to output the feedback information from among the at least one other electronic device, the operation of transmitting the feedback information to the selected at least one feedback output device, and the operation of when the at least one other electronic device is not identified, outputting the feedback information through the foldable electronic device.

### [Brief Description of Drawings]

FIG. 1 is a diagram illustrating an overview in which an electronic device provides feedback information for remote photographing to an external electronic device, according to an embodiment.
FIG. 2 is a flowchart illustrating a method in which an electronic device provides feedback information for remote photographing to an external electronic device, according to an embodiment.
FIG. 3 is a flowchart illustrating a method for transmitting feedback information for remote photographing dependent on a connection to or disconnection from an external electronic device, according to an embodiment.
FIG. 4 is a flowchart illustrating a method for determining a state of an electronic device, according to an embodiment.
FIG. 5A is a diagram illustrating an example of a mounted state of an electronic device, according to an embodiment.
FIG. 5B is a diagram illustrating an example of a mounted state of an electronic device, according to an embodiment.
FIG. 5C is a diagram illustrating an example of a mounted state of an electronic device, according to an embodiment.
FIG. 6 is a flowchart illustrating a method for determining the quality of an image dependent on the type of the image obtained through a camera of an electronic device, according to an embodiment.
FIG. 7 is a flowchart illustrating a method for transmitting feedback information for remote photographing dependent on a connected state of a plurality of external electronic devices, according to an embodiment.
FIG. 8 is a flowchart illustrating a method for determining a plurality of feedback output devices dependent on a connected state of a plurality of external electronic devices, according to an embodiment.
FIGS. 9A and 9B are diagrams illustrating examples of feedback information output dependent on a mounted state of an electronic device, according to an embodiment.
FIGS. 10A and 10B are diagrams illustrating examples of feedback information output through an external electronic device when an image obtained through a camera of an electronic device satisfies a preset criterion of the electronic device, according to an embodiment.
FIGS. 11A and 11B are diagrams illustrating examples of feedback information output through an external electronic device when an image obtained through a camera of an electronic device does not satisfy a preset criterion of the electronic device, according to an embodiment.
FIG. 12 is a diagram illustrating an example of outputting a plurality of pieces of feedback information to a plurality of feedback output devices when an image obtained through a camera of an electronic device satisfies a preset criterion of the electronic device, according to an embodiment.
FIG. 13 is a diagram illustrating an example of outputting a plurality of pieces of feedback information to a plurality of feedback output devices when an image obtained through a camera of an electronic device does not satisfy a preset criterion of the electronic device, according to an embodiment.
FIG. 14 is a diagram illustrating an example of separately outputting a plurality of pieces of feedback information to a plurality of feedback output devices, according to an embodiment.
FIG. 15 is a block diagram of an electronic device in a network environment, according to various embodiments.
FIG. 16 is a block diagram of an electronic device according to an embodiment.

In relation to the description of the drawings, the same or similar reference numerals may be used for the same or similar components.

### [Mode for the Invention]

Embodiments of the disclosure will be described below in detail with reference to the accompanying drawings so that the embodiments of the disclosure may be easily embodied by those skilled in the art to which the disclosure pertains. However, the disclosure may be implemented in various different forms and is not limited to the embodiments described herein. In addition, in order to clearly describe the disclosure in the drawings, portions not related to the description are omitted, and similar portions are given similar reference numerals throughout the specification.

The terms used in the disclosure are described as general terms currently used in consideration of functions mentioned in the disclosure, but this may mean various other terms depending on the intention of engineers engaged in the relevant field, precedents, the emergence of new technologies, etc. Therefore, the terms used in the disclosure should not be interpreted solely based on the names of the terms, but should be interpreted based on the meanings of the terms and the overall contents of the disclosure.

In addition, terms such as first, second, etc. may be used to describe various components, but the components should not be limited by these terms. These terms are used for the purpose of distinguishing one component from another component.

Throughout the specification, when a certain portion is said to be "connected" to another portion, this includes not only a case where it is "directly connected" but also a case where it is "electrically connected" with another element arranged therebetween. In addition, when a certain portion is said to "include" a certain component, this does not mean excluding another component but rather means further including another component, unless specifically stated otherwise.

Phrases such as "in an embodiment" appearing in various places in the disclosure do not necessarily all refer to the same embodiment.

An embodiment of the disclosure may be represented by functional block constructions and various processing operations. Some or all of these functional blocks may be implemented by various numbers of hardware and/or software constructions performing specific functions. For example, the functional blocks of the disclosure may be implemented by one or more microprocessors, or be implemented by circuit constructions for a predefined function. In addition, for example, the functional blocks of the disclosure may be implemented by various programming or scripting languages. The functional blocks may be implemented by algorithms that are executed by one or more processors. In addition, the disclosure may employ the prior art for the sake of electronic configuration, signal processing, and/or data processing, etc. Terms such as "mechanism," "element," "means," and "construction" may be used broadly, and are not limited to mechanical and physical constructions.

In addition, connection lines or connection members between components illustrated in the drawings exemplarily merely represent functional connections and/or physical or circuit connections. In an actual device, connections between the components may be represented by replaceable or added various functional connections, physical connections, or circuit connections.

The disclosure will be described in detail below with reference to the accompanying drawings.

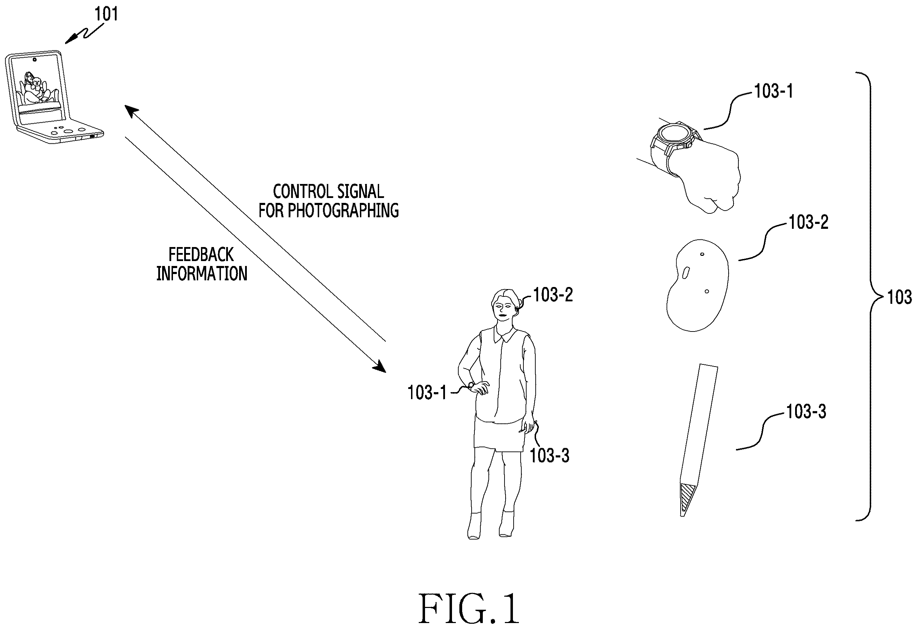

FIG. 1 is a diagram illustrating a system in which an electronic device provides feedback information for remote photographing to an external electronic device, according to an embodiment.

Referring to FIG. 1, a system in which an electronic device provides feedback information for remote photographing to an external electronic device, according to an embodiment, may include an electronic device 101 and at least one external electronic device 103. In a situation in which a user of the electronic device 101 performs remote photographing by using a camera of the electronic device 101, the user of the electronic device 101 may transmit a control signal for photographing to the electronic device 101 wirelessly communicatively connected to the external electronic device 103, by utilizing the external electronic device 103 possessed by the user. When the control signal for photographing is transmitted to the electronic device 101, the electronic device 101 may obtain a captured image of a subject from the camera, based on the transmitted control signal. For example, the electronic device 101 may execute a camera application, based on the transmitted control signal, and may obtain a captured image of a subject from the camera, based on information about at least one of whether a mounted state of the electronic device 101 is a stable state, how far apart the user of the electronic device 101 is from the electronic device 101, or whether the mounted electronic device 101 is in a non-shaking state.

The electronic device 101 may determine the quality of a preview image or the quality of an image obtained based on a control signal from the external electronic device 103, and may transmit feedback information generated based on the determined quality result, to the external electronic device 103. The user of the electronic device 101 may transmit a subsequent control signal for controlling the electronic device 101, based on the feedback information transmitted to the external electronic device 103, to the electronic device 101.

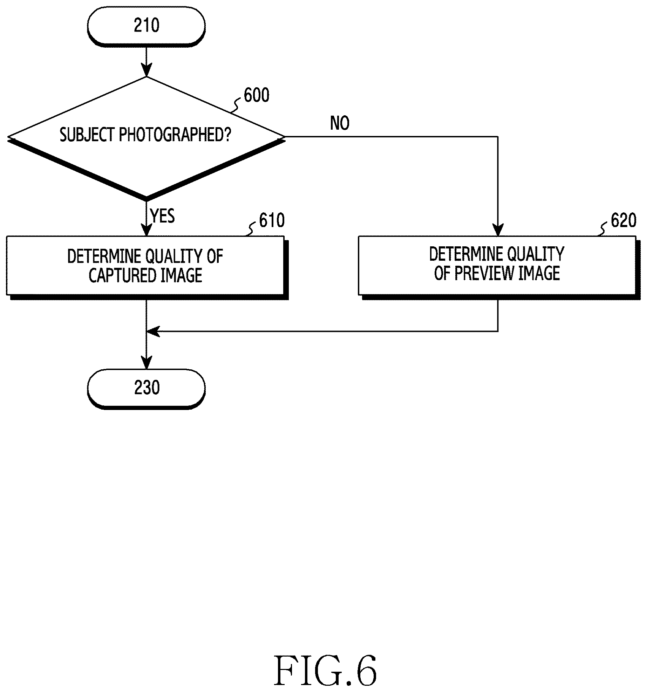

For example, determining the quality of the obtained image may include, but is not limited to, determining whether a state of a subject in an image after photographing satisfies a preset criterion of the electronic device 101 or whether a state of a subject in a preview image before photographing satisfies a preset criterion of the electronic device 101. A detailed example is described later in FIG. 6.

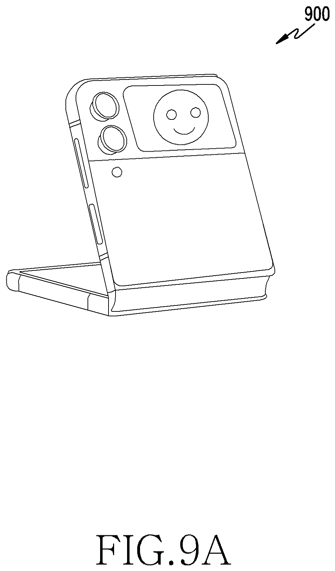

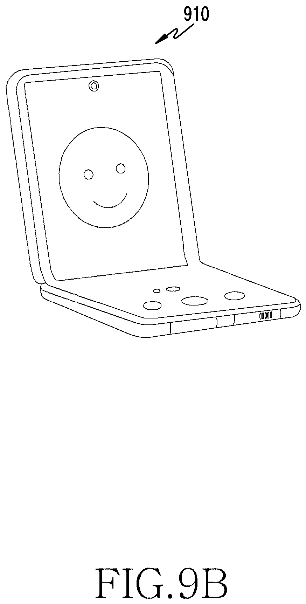

For example, the feedback information may be information about the result of quality determination for an image obtained from the camera of the electronic device 101, and may be information capable of allowing the user of the electronic device 101 to determine whether the image obtained from the camera of the electronic device 101 is obtained according to a preset criterion of the electronic device 101. The feedback information may include visual feedback information, voice feedback information, and vibration feedback information. The feedback information is not limited thereto, and will be described later in examples of FIGS. 9 to 14. The feedback information may be generated in various ways depending on the type of the external electronic device 103, and an appropriate type of the feedback information may be provided to the external electronic device 103.

For example, the subsequent control signal may be whether to re-photograph a subject based on the feedback information transmitted to the external electronic device 103, whether to focus on the subject, whether to end the photographing, whether to delete a specific image from among captured images, etc.

A method for transmitting a subsequent control signal to the electronic device 101 may vary depending on the type of the external electronic device 103. For example, the subsequent control signal may be transmitted in such a manner of tapping a screen of the external electronic device 103 having a controller function. For example, the subsequent control signal may be transmitted by pressing a specific button of the external electronic device 103 having the controller function.

The electronic device 101 may be a device including a camera, and may be, for example, a smartphone, a tablet PC, a mobile phone, a personal digital assistant (PDA), a laptop, a media player, a global positioning system (GPS) device, an e-book reader, a digital broadcasting terminal, a navigation system, a digital camera, a home appliance, or other mobile computing devices, but is not limited thereto. For example, the electronic device 101 may be a foldable device that may be folded by a hinge.

The external electronic device 103 may be a device capable of communicating with the electronic device 101 and receiving feedback information from the electronic device 101, and may be, for example, a smartphone, a tablet PC, a mobile phone, a personal digital assistant (PDA), a laptop, a media player, a global positioning system (GPS) device, an e-book reader, a digital broadcasting terminal, a navigation device, a digital camera, a home appliance, or other mobile computing devices, but is not limited thereto.

For example, the external electronic device 103 may be a wearable electronic device such as a smart watch 103-1, smart glasses, a wireless earphone 103-2, a smart pen 103-3, a smart ring, a headset device, and smart clothing, which are worn by the user.

The electronic device 101 may be communicatively connected to the external electronic device 103 through a network. The network may be implemented as a wired network such as local area network (LAN), wide area network (WAN) or value added network (VAN), or all types of wireless networks such as mobile radio communication network or satellite communication network. In addition, the network may include a combination of at least two or more of local area network, wide area network, value added network, mobile radio communication network, or satellite communication network, and is a comprehensive data communication network allowing respective network components illustrated in FIG. 1 to communicate smoothly with each other and includes wired Internet, wireless Internet, and mobile radio communication network. The wireless communication may be, but is not limited to, wireless LAN (Wi-Fi), Bluetooth, Bluetooth low energy, Zigbee, Wi-Fi direct (WFD), ultra wideband (UWB), infrared communication (infrared data association (IrDA)), near field communication (NFC), etc.

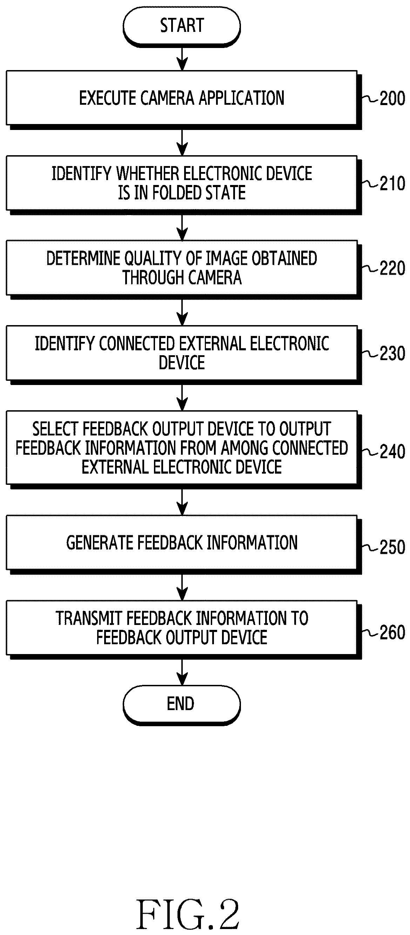

FIG. 2 is a flowchart illustrating a method in which an electronic device provides feedback information for remote photographing to an external electronic device, according to an embodiment.

In operation 200, the electronic device 101 may execute a camera application. The electronic device 101 may execute the camera application, based on a user input to the electronic device 101. Or, the electronic device 101 may receive a control signal for executing the camera application from the external electronic device 103, and execute the camera application in response to the control signal. The camera application may be an application that provides a function of photographing a subject by using at least one camera of the electronic device 101.

In operation 210, the electronic device 101 may identify a folded state of the electronic device 101.

The electronic device 101 may identify a folding angle of the electronic device 101. The folding angle may indicate a degree to which a foldable electronic device is folded by a hinge of the foldable electronic device. For example, the electronic device 101 may identify the folding angle indicating the degree to which the electronic device 101 is folded, by using at least one sensor within the electronic device 101. When a user of the electronic device 101 puts the electronic device 101 on a surface so as to photograph using the camera of the electronic device 101, the folding angle of the electronic device 101 may be within a predefined range. Whether the folding angle is within the predefined range may be used by the electronic device 101 in order for the electronic device 101 to determine whether the user has an intention to remotely photograph using the camera of the electronic device 101.

The electronic device 101 may determine whether a folded state of the electronic device 101 satisfies a preset condition. For example, whether the folded state of the electronic device 101 satisfies the preset condition may be determined based on the folding angle of the electronic device 101. For example, when the folding angle of the electronic device 101 is within a predefined angle range, the electronic device 101 may determine that the folded state of the electronic device 101 satisfies the preset condition. For example, when the camera of the electronic device 101 is not facing the sky or the floor, but is facing a direction within a predefined angle range from the horizontal direction, the electronic device 101 may determine that the folded state of the electronic device 101 satisfies the preset condition. For example, when the electronic device 101 is standing vertically or horizontally in the folded state, the electronic device 101 may determine that the folded state of the electronic device 101 satisfies the preset condition.

According to an embodiment, the electronic device 101 may determine at least one of a folding angle of the electronic device 101, a direction in which the camera of the electronic device 101 is facing, or an angle at which the electronic device 101 stands up, based on a sensing value detected by at least one sensor of the electronic device 101. In addition, the electronic device 101 may determine whether the folded state of the electronic device 101 satisfies the preset condition, based on at least one of the folding angle of the electronic device 101, the direction in which the camera of the electronic device 101 is facing, or the angle at which the electronic device 101 stands up. In operation 220, the electronic device 101 may determine the quality of an image obtained through the camera. When the folded state of the electronic device 101 satisfies the preset condition, the electronic device 101 may determine the quality of the image obtained through the camera. According to an embodiment, the operation of determining, by the electronic device 101, the quality of the image obtained from the camera may include the operation of determining the quality of an image after photographing or the quality of a preview image before photographing. For example, the user may preset a criterion for the quality of an image to the electronic device 101. For example, the electronic device 101 may automatically set a criterion for satisfaction of the quality of an obtained image, based on a list of images stored in the memory by the user. The operation of determining, by the electronic device 101, the quality of the image obtained from the camera may include, for example, determining whether a focus of a subject in a preview image before photographing is not shaken, or whether a composition or angle of view of the subject and a background in the preview image satisfies a preset criterion of the electronic device 101. The operation of determining, by the electronic device 101, the quality of the image obtained from the camera may include, for example, determining whether an image after photographing is not shaken, whether the face of a subject (for example, when the subject is a person) in the image is not frowning, or whether the subject (for example, when the subject is a person) in the image is not closing its eyes. A specific example of determining the quality of the image after photographing or the quality of the preview image before photographing will be described later in FIG. 6.

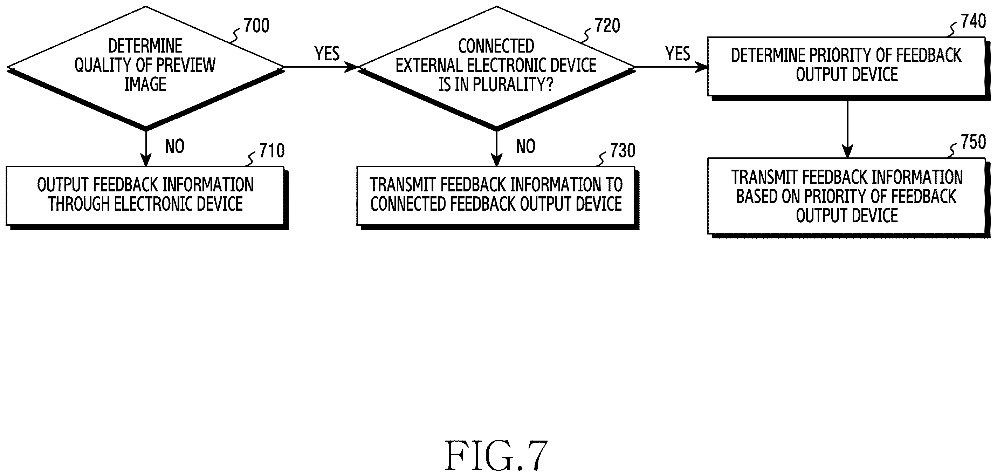

In operation 230, the electronic device 101 may identify a connected external electronic device 103. The electronic device 101 may determine whether the connected external electronic device 103 exists or whether the connected external electronic device 103 exists in plurality. The electronic device 101 may identify the type of the connected external electronic device 103. For example, the electronic device 101 may identify whether the connected external electronic device 103 is a device having at least one of a controller function, a display function, a sound output function, or a haptic function. By obtaining device information of the external electronic device 103, the electronic device 101 may determine whether the connected external electronic device 103 exists. As the camera application is executed, the electronic device 101 may request the device information of the external electronic device 103 to the external electronic device 103, and may receive the device information from the external electronic device 103. However, the timing at which the electronic device 101 requests the device information to the external electronic device 103 is not limited thereto. The device information of the external electronic device 103 may include, for example, a model name of the external electronic device 103, an international mobile equipment identity (IMEI) number, a manufacturing company, an operating system, version information, a screen resolution, and an identification value of an application installed in the external electronic device 103, but is not limited thereto. The operation of transmitting and outputting the feedback information depending on whether the connected external electronic device 103 exists or whether the external electronic device 103 exists in plurality will be described later in FIG. 7.

In operation 240, the electronic device 101 may select a feedback output device to output feedback information from among the connected external electronic devices 103. When the external electronic device 103 is not connected to the electronic device 101, the feedback output device may be the electronic device 101. When the external electronic device 103 is connected to the electronic device 101, the feedback output device may be the external electronic device 103. When the connected external electronic device 103 exists in plurality, at least one of the connected external electronic devices 103 may be selected as the feedback output device. The feedback output device may be selected according to a priority being based on a feedback information output method of the external electronic device 103 or the characteristics of the external electronic device 103. For example, even when the electronic device 101 and the plurality of external electronic devices 103 exist, the feedback output device may be selected based on the determined priority. The type of the electronic device 101 or the external electronic device 103 connected to the electronic device 101 may be, for example, a smart watch having a display function and a controller function, a smart ring or smart pen having only a controller function, or a wireless earphone having only a sound output function.

When the electronic device 101 or the external electronic device 103 connected to the electronic device 101 exists, a priority for selecting the feedback output device may be preset based on a function supported by the external electronic device 103. For example, the highest priority may be a smart watch having both a controller function and a screen display function. The next priority may be a smart pen or smart ring having only a controller function, and the next priority after that may be a wireless earphone having only a sound output function.

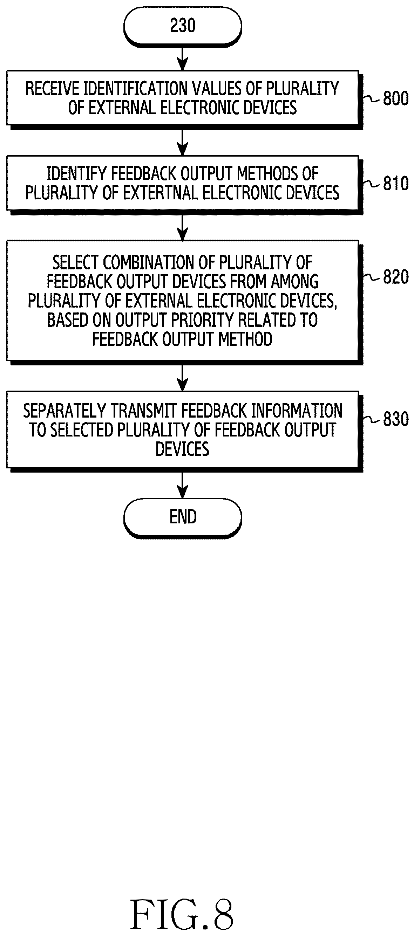

For example, when the user is wearing the smart watch and the wireless earphone among the plurality of external electronic devices 103 connected to the electronic device 101, the smart watch may be selected as the feedback output device. For example, when the user is wearing the smart pen and the wireless earphone among the plurality of external electronic devices 103 connected to the electronic device 101, the smart pen may be selected as the feedback output device. However, only the single external electronic device 103 is not necessarily selected based on priority as the feedback output device, and a plurality of feedback output devices may be selected from among the plurality of external electronic devices 103. A specific example of selecting a combination of the plurality of feedback output devices will be described later in FIG. 8.

For example, the priority for selecting the feedback output device may be also determined based on the type of the external electronic device and a feedback output method, but the user may also set the priority for selecting the feedback output device to the electronic device 101 in advance.

In operation 250, the electronic device 101 may generate feedback information. The feedback information may include information related to the result of quality determination for an image obtained by the electronic device 101 from the camera of the electronic device 101. For example, the feedback information may include information informing the user of the result that a focus, composition or angle of view of a preview image before photographing satisfies a preset criterion of the electronic device 101 as a result of quality determination for the preview image before photographing. For example, the feedback information may include information informing the user of the result that a subject in an image after photographing matches a preset criterion of the electronic device 101 such as that the subject is not shaking or is not frowning (e.g., person's facial expression).

According to an embodiment, the feedback information may include a plurality of pieces of feedback information, such as visual feedback information, voice feedback information, and vibration feedback information. When an image obtained from the camera satisfies a preset criterion of the electronic device 101, the feedback information may be generated as follows. For example, in the visual feedback information, the electronic device 101 may generate blue color information or generate animation information such as a smiley character display, in order to inform the user of the fact that an image obtained from the camera has passed a preset criterion from the quality determination of the electronic device 101. In the voice feedback information, the electronic device 101 may generate voice feedback information such as "Best shot" or "Good shot," in order to inform the user of the fact that the image obtained from the camera has passed the preset criterion from the quality determination of the electronic device 101. In the vibration feedback information, the electronic device 101 may generate vibration feedback information in order to inform the user of the fact that the image obtained from the camera has passed the preset criterion from the quality determination of the electronic device 101.

When the image obtained from the camera does not satisfy the preset criterion of the electronic device 101, the electronic device 101 may generate feedback information indicating that the quality of the obtained image does not satisfy the preset criterion. For example, in the visual feedback information, the electronic device 101 may generate yellow color information or generate animation information such as frowning character display, in order to inform the user of the fact that the image obtained from the camera has not passed the preset criterion from the quality determination of the electronic device 101. In the voice feedback information, the electronic device 101 may generate voice feedback information such as "It was shaken" or "It wasn't captured well", in order to inform the user of the fact that the image obtained from the camera has not passed the preset criterion from the quality determination of the electronic device 101. In the vibration feedback information, the electronic device 101 may generate vibration feedback information, in order to inform the user of the fact that the quality of the image obtained from the camera of the electronic device 101 has not satisfied the preset criterion.

In operation 260, the electronic device 101 may transmit the feedback information to the feedback output device. The feedback information in a format suitable to an output method of the selected feedback output device may be transmitted to the feedback output device selected according to a priority being based on the characteristics of the external electronic device 103. For example, when a smart watch is the feedback output device, a smile character may be displayed on a screen of the smart watch, in order to inform the user of the result that the quality of the image obtained from the camera satisfies the preset criterion. For example, when a wireless earphone is the feedback output device, voice feedback information such as "It was shaken" may be output by the wireless earphone, in order to inform the user of the result that the quality of the image obtained from the camera has not satisfied the preset criterion.

The user of the electronic device 101 may transmit a subsequent control signal for controlling the electronic device 101, based on the transmitted feedback information, to the electronic device 101. For example, the user may transmit a control signal to the electronic device 101 by touching a display screen of the external electronic device 103. For example, the user may transmit a control signal to the electronic device 101 by pressing a specific button of the external electronic device 103. For example, the user may transmit a control signal to the electronic device 101 by inputting voice to a microphone of the external electronic device 103. A method for transmitting the subsequent control signal is not limited thereto, and a signal for controlling remote photographing may be exchanged between the electronic device 101 and the external electronic device 103 in various ways.

The above description has been made for identifying a folding angle of the electronic device 101 and determining, by the electronic device 101, the quality of an image when the folding angle of the electronic device 101 satisfies a preset condition, but is not limited thereto. For example, the electronic device 101 may identify whether a shaking state of the electronic device 101 is a stable state, and may determine the quality of the image when the shaking state of the electronic device 101 is the stable state.

The shaking state of the electronic device 101 may be a state of the electronic device 101 regarding whether the electronic device 101 is shaking. In addition, a state in which the electronic device 101 is not moving and not shaking may be a stable state. For example, when the electronic device 101 is put on a surface and is not moving, it may be determined that the shaking state of the electronic device 101 is the stable state. For example, when the electronic device 101 is fixed to a fixture such as a tripod and is not moving, it may be determined that the shaking state of the electronic device 101 is the stable state. For example, when the electronic device 101 is mounted on a mount rack and is not moving, it may be determined that the shaking state of the electronic device 101 is the stable state.

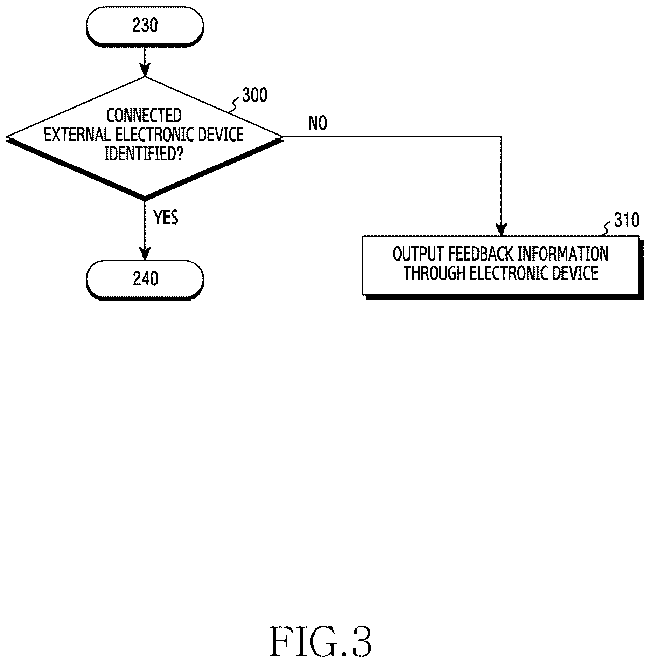

FIG. 3 is a flowchart illustrating a method for transmitting feedback information for remote photographing dependent on a connection to or disconnection from an external electronic device, according to an embodiment.

In operation 300, the electronic device 101 may identify whether a connected external electronic device exists. When the connected external electronic device is identified in operation 230, the electronic device 101 may determine that the connected external electronic device exists in operation 300. When the connected external electronic device is not identified in operation 230, the electronic device 101 may determine that the connected external electronic device does not exist in operation 300.

When the connected external electronic device 103 is not identified, the electronic device 101 may output feedback information through the electronic device 101 in operation 310. For example, the electronic device 101 may display a smiley character or color blue, which is one of visual feedback information, through a display of the electronic device 101. A user of the electronic device 101 may determine whether an image obtained from a camera of the electronic device 101 satisfies a set criterion of the electronic device 101, through the feedback information displayed on the display of the electronic device 101.

However, the feedback information is not necessarily transmitted to either the electronic device 101 or the external electronic device 103, based on whether the connection of the external electronic device 103 is identified, and one piece of feedback information may be simultaneously output by the electronic device 101 and the external electronic device 103, or a plurality of pieces of feedback information may be separately transmitted to the electronic device 101 and the external electronic device 103.

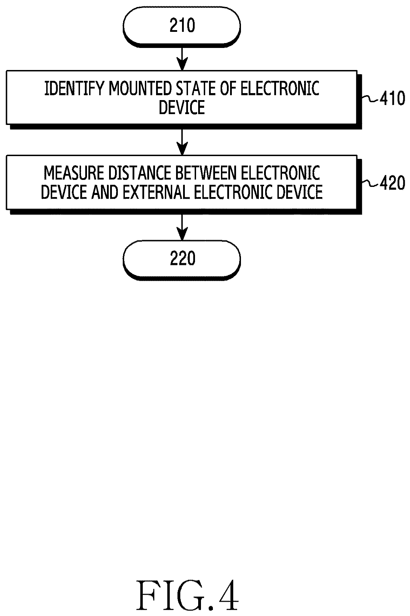

FIG. 4 is a flowchart illustrating a method for determining a state of an electronic device, according to an embodiment.

Operations 410 to 420 of FIG. 4 may be executed between operations 210 and 220 of FIG. 2. However, the order of operations is not limited thereto, and they may be performed sequentially or be performed in parallel.

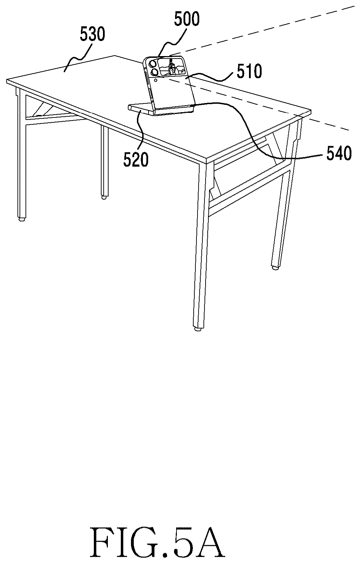

In operation 410, the electronic device 101 may perform the operation of identifying a mounted state of the electronic device 101. The mounted state of the electronic device 101 is described later in FIGS. 5A to 5C. Based on the mounted state of the electronic device 101 determined by a processor of the electronic device 101, the processor may determine whether a state of the electronic device 101 is a mounted state capable of performing remote photographing. The mounted state of the electronic device 101 may include a folded state of the electronic device 101 and a shaking state of the electronic device 101. For example, the operation of identifying the mounted state of the electronic device 101 may include the operation of determining, by the processor, an angle formed by a first housing and a second housing included in a housing portion of the electronic device 101. When the angle formed by the first housing and the second housing of the electronic device 101 is within a first angle range and the shaking state of the electronic device 101 is a stable state, the mounted state of the electronic device 101 may be a first mounted state. In the first mounted state, a preview image before photographing or an image after photographing may be displayed through a display provided outside the housing portion of the electronic device 101, and thus, a user of the electronic device 101 may check the preview image before photographing or the image after photographing through the display provided outside the housing portion of the electronic device 101. In the first mounted state, the user may check feedback information about the analysis result of an image obtained from a camera of the electronic device 101 through the display provided outside the housing portion of the electronic device 101. When the angle formed by the first housing and the second housing is a second angle range exceeding the first angle range and the shaking state of the electronic device 101 is the stable state, the mounted state of the electronic device 101 may be a second mounted state. In the second mounted state, a preview image before photographing or an image after photographing may be displayed through a display provided inside the housing portion of the electronic device 101, and thus, the user may check the preview image before photographing or the image after photographing through the display provided inside the housing portion of the electronic device 101. In the second mounted state, the user may check feedback information about the analysis result of an image obtained from the camera through the display provided inside the housing portion of the electronic device 101.

According to an embodiment, the mounted state of the electronic device 101 may be also determined based on a direction in which a hinge of the electronic device 101 is facing. In addition to the first mounted state and second mounted state of the electronic device 101, the electronic device 101 may also be in a third mounted state depending on a direction in which the hinge connecting the first housing to the second housing is facing, for example, when the hinge is positioned facing the floor, and may be in a fourth mounted state when the hinge is positioned facing the sky. The mounted state of the electronic device 101 may be preset to the electronic device 101, or may be also set by the user. The mounted state of the electronic device 101 may be various mounted states in addition to the states described above, and is not limited thereto.

When the mounted state of the electronic device 101 does not match a set mounted state of the electronic device 101, the processor of the electronic device 101 may provide feedback information indicating that the mounted state of the electronic device 101 is not a mounted state for remote photographing. The feedback information may be output by the electronic device 101 or be transmitted to the external electronic device 103. The feedback information may include, for example, voice feedback information such as "it has been well mounted" when the mounted state for remote photographing is satisfied. The feedback information may include, for example, visual feedback information in the form of displaying animation including a color of blue, etc., a character, etc. on a display of the electronic device 101 or the external electronic device 103 in order to inform the user of information that it has been well mounted when the mounted state for remote photographing is satisfied. The feedback information may include, for example, vibration feedback information in the form of making a preset vibration of the electronic device 101 or the external electronic device 103 in order to inform the user of information that it has been well mounted when the mounted state for remote photographing is satisfied.

The processor of the electronic device 101 may provide the user with feedback information about the change of a mounted state of the electronic device 101. For example, the processor of the electronic device 101 may provide feedback information about the change of the mounted state of the electronic device 101 from a first mounted state to a second mounted state. The mounted state of the electronic device 101 may be changed by external factors, or be changed by the user. The feedback information indicating the change of the mounted state of the electronic device 101 may be output by the electronic device 101 or be transmitted to the external electronic device 103. The user who confirms the provided feedback information may adjust the mounted state of the electronic device 101, thereby enabling desired remote photographing.

In operation 420, the electronic device 101 may measure a distance between the electronic device 101 and the external electronic device 103. The electronic device 101 may perform the operation of measuring a distance to the user who wears or carries the external electronic device 103. The electronic device 101 may be communicatively connected to the external electronic device 103 through short-range wireless communication, and the electronic device 101 may measure the strength of a signal exchanged with the external electronic device 103 through the short-range wireless communication, thereby identifying the distance between the electronic device 101 and the external electronic device 103. For example, the electronic device 101 may be communicatively connected to the external electronic device 103 through Bluetooth communication or wireless fidelity (WIFI) direct communication, and may identify the distance between the electronic device 101 and the external electronic device 103, based on the strength of the transmitted and received signal. In this case, for example, the electronic device 101 may identify the distance between the electronic device 101 and the external electronic device 103 by using a received signal strength indicator (RSSI) value that is periodically measured.

Or, for example, the electronic device 101 may identify the distance from the external electronic device 103 by using ultra-wideband (UWB) communication technology. In this case, for example, the electronic device 101 may exchange wideband signals with the external electronic device 103 through UWB communication, thereby identifying the distance between the electronic device 101 and the external electronic device 103 by using time of flight (ToF) distance measurement technology.

The electronic device 101 may identify the distance between the electronic device 101 and the external electronic device 103 and determine whether the distance is suitable for long-distance photographing. Whether the distance is suitable for long-distance photographing may be preset to the electronic device 101. Whether the distance is suitable for long-distance photographing may be set to the electronic device 101 by the user.

When the user is positioned at a distance exceeding a preset distance or a distance capable of allowing a connection of short-range wireless communication between the electronic device 101 and the external electronic device 103, the electronic device 101 may output feedback information indicating that long-distance photographing is impossible through the electronic device 101. For example, when the user is positioned at a distance where long-distance photographing is impossible, the electronic device 101 may output voice feedback information such as "long-distance photographing is impossible" through the electronic device 101. For example, when the user is positioned at the distance where the long-distance photographing is impossible, a yellow or red color may be provided to the electronic device 101 and be displayed on the display of the electronic device 101. For example, when the user is positioned at the distance where the long-distance photographing is impossible, vibration feedback information making a vibration may be provided to the electronic device 101.

As described above, the electronic device 101 may identify the mounted state of the electronic device 101 or the distance between the electronic device 101 and the external electronic device 103, and determine whether the electronic device 101 is in a state where long-distance photographing is possible. In addition, the electronic device 101 may provide feedback information about the determined result to the user.

FIG. 5A is a diagram illustrating an example of a mounted state of an electronic device according to an embodiment.

Referring to FIG. 5A, a foldable electronic device 500, which is an example of the electronic device 101 of FIG. 1, may be put on a table 530 in a first mounted state. In the operation of identifying the mounted state of the electronic device 101 in operation 410 of FIG. 4, a mounted state of the foldable electronic device 500 may be identified as the first mounted state among a plurality of mounted states.

The foldable electronic device 500 may include a first housing 510, a second housing 520, and a hinge 540 connecting the first housing 510 to the second housing 520. The first mounted state of the foldable electronic device 500 may be a state in which an angle formed by the first housing 510 and the second housing 520 is within a first angle range, and the second housing 520 including no display is put on the surface of the table 530. In the first mounted state, a user of the foldable electronic device 500 may view an image obtained from a camera of the foldable electronic device 500 through a display provided outside the first housing 510.

The operation of determining, by the foldable electronic device 500, that the foldable electronic device 500 is in the first mounted state may include the operation of determining that the angle formed by the first housing 510 and the second housing 520 of the foldable electronic device 500 is within the first angle range, and that the second housing 520 is put on the surface of the table 530 in a state where the foldable electronic device 500 is not shaken.

When determining that the state of the foldable electronic device 500 is the first mounted state, the foldable electronic device 500 may receive a control signal from the external electronic device 103 receiving a user input, and obtain an image from the camera of the foldable electronic device 500.

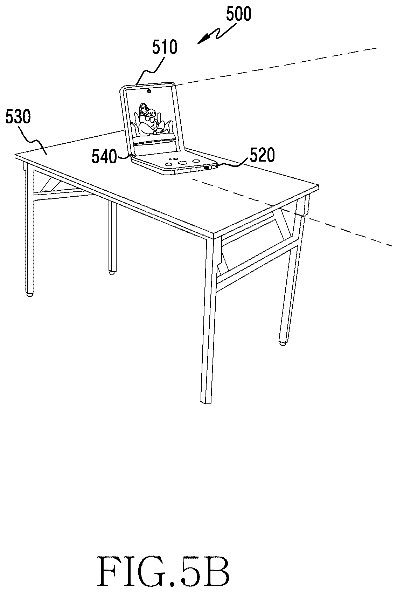

FIG. 5B is a diagram illustrating an example of a mounted state of an electronic device according to an embodiment.

Referring to FIG. 5B, a foldable electronic device 500, which is an example of the electronic device 101 of FIG. 1, may be put on the table 530 in a second mounted state. In the operation of identifying the mounted state of the electronic device 101 in operation 410 of FIG. 4, a mounted state of the foldable electronic device 500 may be identified as the second mounted state among a plurality of mounted states.

The foldable electronic device 500 may include a first housing 510, a second housing 520, and a hinge 540 connecting the first housing 510 to the second housing 520. The second mounted state of the foldable electronic device 500 may be a state in which an angle formed by the first housing 510 and the second housing 520 is within a second angle range exceeding a first angle range, and the second housing 520 including no display is put on the surface of the table 530. In the second mounted state, a user of the foldable electronic device 500 may view an image obtained from a camera of the foldable electronic device 500 through a display provided inside the first housing 510.

The operation of determining, by the foldable electronic device 500, that the foldable electronic device 500 is in the second mounted state may include the operation of determining that an angle formed by the first housing 510 and the second housing 520 of the foldable electronic device 500 is within the second angle range exceeding the first angle range, and that the second housing 520 is put on the surface of the table 530 in a state where the foldable electronic device 500 is not shaken.

When determining that the state of the foldable electronic device 500 is the second mounted state, the foldable electronic device 500 may receive a control signal from the external electronic device 103 receiving a user input, and obtain an image from the camera of the foldable electronic device 500.

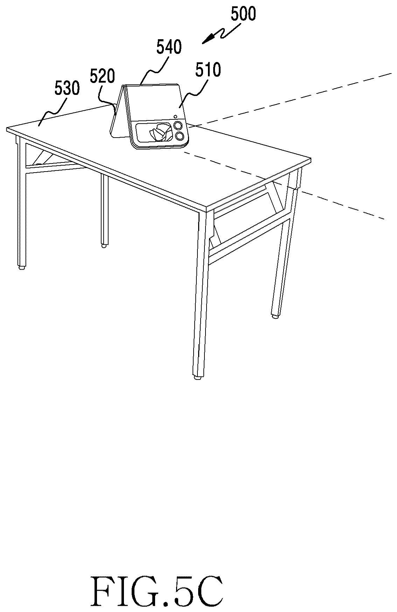

FIG. 5C is a diagram illustrating an example of a mounted state of an electronic device according to an embodiment.

Referring to FIG. 5C, a foldable electronic device 500, which is an example of the electronic device 101 of FIG. 1, may be put on a table 530 in a fourth mounted state. In the operation of identifying the mounted state of the electronic device 101 in operation 410 of FIG. 4, a mounted state of the foldable electronic device 500 may be identified as the fourth mounted state among a plurality of mounted states.

The foldable electronic device 500 may include a first housing 510, a second housing 520, and a hinge 540 connecting the first housing 510 to the second housing 520. The fourth mounted state of the foldable electronic device 500 may be a state in which the foldable electronic device 500 is put on the surface of the table 530 such that the hinge 540 of the foldable electronic device 500 faces the sky in a state where the first housing 510 and the second housing 520 are folded at an acute angle.

The operation of determining, by the foldable electronic device 500, that the foldable electronic device 500 is in the fourth mounted state may include the operation of determining that the foldable electronic device 500 is put on the surface of the table 530 such that the hinge 540 of the foldable electronic device 500 faces the sky in a state where the first housing 510 and the second housing 520 are folded at an acute angle, and that the foldable electronic device 500 is put on the surface of the table 530 in a state where the foldable electronic device 500 is not shaken.

When determining that the state of the foldable electronic device 500 is the fourth mounted state, the foldable electronic device 500 may receive a control signal from the external electronic device 103 receiving a user input, and obtain an image from a camera of the foldable electronic device 500.

FIG. 6 is a flowchart illustrating a method for determining the quality of an image obtained through a camera of an electronic device according to an embodiment. Operations 600 to 620 of FIG. 6 may be executed between operations 210 and 230 of FIG. 2.

In operation 600, the electronic device 101 may determine whether a subject has been photographed.

The electronic device 101 may receive a user input and photograph a subject through a camera of the electronic device 101. When the electronic device 101 receives a control signal for photographing a subject from the external electronic device 103 receiving a user input, the electronic device 101 may initiate photographing.

The determining of the quality of an image obtained from the camera of the electronic device 101 may be divided into operations 610 and 620 depending on whether the electronic device 101 has photographed a subject. When the electronic device 101 has not photographed the subject, the electronic device 101 may determine the quality of a preview image before photographing in operation 620. When the electronic device 101 has photographed the subject, the electronic device 101 may determine the quality of am image after photographing in operation 610.

Operation 620 of determining, by the electronic device 101, the quality of the preview image may be the operation of determining, by the electronic device 101, whether at least one of a focus, composition, or angle of view of the preview image satisfies a preset criterion of the electronic device 101. For example, when the subject in the preview image is out of focus and is shaken (e.g., a person's face appears blurry when the subject is a person), the electronic device 101 may determine that the quality of the preview image does not satisfy a set criterion of the electronic device 101. For example, when the composition of the subject and a background in the preview image do not match with each other (e.g., when a position where the subject is placed and the background are not balanced with each other, when a plurality of subjects are not symmetrical with each other, etc.), the electronic device 101 may determine that the quality of the preview image does not satisfy the set criterion of the electronic device 101. For example, when the angle of view of the preview image does not satisfy the preset criterion of the electronic device 101 (e.g., angle range, preset by the user, of a scene to be photographed), the electronic device 101 may determine that the quality of the preview image does not satisfy the set criterion of the electronic device 101. However, the criterion of the determining of the quality of the preview image is not limited to the focus, composition, and angle of view of the preview image, and the electronic device 101 may determine the quality of the preview image in various ways depending on user's settings.

The operation 610 of photographing, by the electronic device 101, the subject and determining the quality of an image after photographing may include the operation of determining, by the electronic device 101, whether a captured image is shaken or whether a subject's face satisfies a preset criterion of the electronic device 101.

For example, determining, by the electronic device 101, whether the captured image is shaken may determine whether a subject or background in the captured image is shaken. For example, determining, by the electronic device 101, whether a subject's face in the captured image satisfies a preset criterion of the electronic device 101 may determine whether, when the subject is a person, a subject's facial expression is frowning or whether the subject has closed his or her eyes. The preset criterion of the electronic device 101 may be directly set by a user of the electronic device 101. Even without the user directly setting the preset criterion of the electronic device 101, the electronic device 101 may compare an image captured by a camera of the electronic device 101 with images previously stored in a memory, and determine whether the quality of the image satisfies a predefined criterion.

Operations 600 and 610 may be performed sequentially or be performed in parallel. For example, when feedback information about a preview image is provided to the user after the quality determination is performed in operation 610, the user may initiate photographing. For example, the user may simultaneously receive feedback information of quality determination of a preview image and feedback information of quality determination of a captured image through the electronic device 101 or the external electronic device 103.

When the user receives feedback information being based on the analysis result of the preview image or captured image, the user may transmit a subsequent control signal to the electronic device 101. For example, the user may zoom in or zoom out the camera of the electronic device 101 through the external electronic device 103, based on feedback information about a composition or angle of view of the preview image, and adjust a focus or angle of view of the preview image. For example, based on feedback information about the captured image, the user may initiate re-photographing of the electronic device 101 through the external electronic device 103.

FIG. 7 is a flowchart illustrating a method for transmitting feedback information for remote photographing dependent on a connected state of a plurality of external electronic devices according to an embodiment.

In operation 700, the electronic device 101 may identify whether a connected external electronic device 103 exists. A method for identifying that the external electronic device 103 is connected may be identified by the external electronic device 103 identification method of operation 230 of FIG. 2 described above, but is not limited thereto.

When the connected external electronic device 103 does not exist as the result of identifying, by the electronic device 101, the external electronic device 103 in operation 700, the electronic device 101 may output feedback information through the electronic device 101 in operation 710. For example, a user of the electronic device 101 may receive visual feedback information that is output through a display of the electronic device 101. For example, in a situation where the user performs remote photographing by using the electronic device 101, when a photographed subject is shaken, the electronic device 101 may output a yellow color or a frowning smile through the display and inform the user that a captured photo has a problem. However, by user's setting, the feedback information may be output through the electronic device 101 even when the external electronic device 103 connected to the electronic device 101 exists.

When the connected external electronic device 103 is identified in operation 700, the electronic device 101 may identify whether a plurality of connected external electronic devices 103 exist in operation 720. Identifying whether the plurality of connected electronic devices 103 exist may be used for determining a plurality of feedback output devices, which will be described later in FIG. 8.

When the plurality of connected external electronic devices 103 do not exist in operation 720, operation 730 may be performed. In operation 730, the electronic device 101 may transmit feedback information to the connected external electronic device 103. Operation 730 may correspond to operation 260 of FIG. 2. Even when the connected external electronic device 103 exists, the electronic device 101 may output the feedback information through the electronic device 101. Or, the electronic device 101 may output the feedback information through all of the electronic device 101 and the external electronic device 103.

When the electronic device 101 identifies the plurality of external electronic devices 103 in operation 720, the electronic device 101 may determine a priority of the feedback output device in operation 740. The operation of determining the priority of the feedback output device may include the operation of selecting an external electronic device to receive feedback information. The priority may be determined based on a method in which the external electronic device 103 is capable of outputting the feedback information. For example, a smart watch capable of providing a display function and a controller function may be determined as the highest priority. For example, a smart pen or smart ring capable of providing a controller function may be determined as the next highest priority. For example, a wireless earphone providing only a sound output function may be determined as the last priority. However, the above-described priority determination method is merely an example, and may not be limited thereto.

Based on the priority determined in operation 740, the electronic device 101 may transmit feedback information to the feedback output device according to the priority of the feedback output device in operation 750. Rather than transmitting feedback information only to the highest-priority feedback output device, the electronic device 101 may also transmit some of a plurality of pieces of feedback information to the highest-priority feedback output device, and transmit other pieces of feedback information to the next-priority feedback output device. An example of separately transmitting, by the electronic device 101, the plurality of pieces of feedback information to the plurality of feedback output devices will be described later with reference to FIG. 8.

FIG. 8 is a flowchart illustrating a method in which an electronic device separately transmits feedback information to a plurality of feedback output devices when a plurality of external electronic devices are connected to the electronic device, according to an embodiment.

According to an embodiment, operations 800 to 830 of FIG. 8 may be performed after operation 230 of FIG. 2 is performed.

In operation 800, the electronic device 101 may receive identification values of a plurality of external electronic devices. The electronic device 101 may receive identification values including model names, international mobile equipment identity (IMEI) numbers, manufacturers, operating systems, version information, screen resolutions of the plurality of external electronic devices 103, identification values of applications installed in the external electronic devices 103, etc.

In operation 810, the electronic device 101 may identify a feedback output method of the plurality of external electronic devices 103. The electronic device 101 may identify whether each of the plurality of external electronic devices 103 supports a method of outputting through at least one of a display, sound, and haptic function as the feedback output method. In addition, the electronic device 101 may identify whether the external electronic device 103 has a controller function, in addition to the feedback output method of the external electronic device 103. The reason why the electronic device 101 identifies whether the external electronic device 103 has the controller function in addition to the feedback output method of the external electronic device 103 may be to enable the external electronic device 103 to transmit a subsequent control signal to the electronic device, based on a user input, after receiving a feedback.

In operation 820, the electronic device 101 may select a combination of a plurality of feedback output devices from among the plurality of external electronic devices, based on an output priority related to the feedback output method. The output priority may be determined based on the number and type of functions supported by the external electronic device 101. For example, the electronic device 101 may determine an external electronic device (e.g., smart watch) providing both a display function and a controller function, as the highest priority. When only an external electronic device (e.g., smart pen, smart ring) providing only a controller function is connected to the electronic device 101, the electronic device 101 may be determined as the feedback output device. When only an external electronic device (e.g., wireless earphone) providing only a sound function and an external electronic device (e.g., smart pen, smart ring) providing only a controller function are connected to the electronic device 101, the external electronic device (e.g., wireless earphone) providing only the sound function may be selected as the feedback output device.

For example, when the electronic device 101 determines an external electronic device (e.g., smart watch) simultaneously providing a display function and a controller function as the highest priority, a user of the electronic device 101 may receive feedback information through the external electronic device, and control the electronic device 101 through the external electronic device. For example, when only an external electronic device (e.g., smart pen, smart ring) providing only a controller function is connected to the electronic device 101, the electronic device 101 may output feedback information through the electronic device 101, and control the electronic device 101 through the external electronic device 103. For example, when only an external electronic device (e.g., wireless earphone) providing only a sound function and an external electronic device (e.g., smart pen or smart ring) providing only a controller function are connected to the electronic device 101, the electronic device 101 may provide feedback information through the external electronic device (e.g., wireless earphone) providing only the sound function, and control the electronic device 101 through the external electronic device (e.g., smart pen or smart ring) providing only the controller function.

For example, the determining of the priority is not limited to dividing the external electronic devices 103 to which to transmit the feedback information, and to transmit the control signal, as described above, and may also be to select a combination of the external electronic devices 103 to which to transmit, by the electronic device 101, a plurality of pieces of feedback information to a plurality of external electronic devices 103. For example, the combination of the external electronic devices 103 to which to transmit the plurality of pieces of feedback information may include selecting the electronic device 101 to output visual feedback information and a wireless earphone to output voice feedback information. For example, the combination of the external electronic devices 103 to which to transmit the plurality of pieces of feedback information may include selecting a smart watch to output visual feedback information and a wireless earphone to output voice feedback information. For example, the combination of the external electronic devices 103 to which to transmit the plurality of pieces of feedback information may include selecting the electronic device 101 to output visual feedback information, a wireless earphone to output voice feedback information, and a smart pen to control the electronic device 101.

In operation 830, the electronic device 101 may separately transmit feedback information to the selected plurality of feedback output devices. For example, the electronic device 101 may output visual feedback information of a smile character, and the wireless earphone may output voice feedback information of "Best shot." For example, the smart watch may output visual feedback information of a smile character, and output voice feedback information of "Best shot." For example, the electronic device 101 may output visual feedback information of a blue color, the wireless earphone may output voice feedback information of "Best shot", and a smart pen may be used to control a signal for re-photographing of the electronic device 101.

A priority determination criterion and a method for separately transmitting a plurality of pieces of feedback information to a plurality of feedback output devices are not limited to those described in FIG. 8, and besides this, there may be also various feedback output device determination criteria and selectable combinations.

FIGS. 9A and 9B are diagrams illustrating examples of feedback information output dependent on a mounted state of an electronic device, according to an embodiment.

A device 900 of FIG. 9A and a device 910 of FIG. 9B may correspond to the electronic device 101 of FIG. 1. FIG. 9A is a diagram illustrating a state in which feedback information is displayed on a display of the device 900 in a first mounted state in which an angle formed by a first housing and second housing of the device 900 is within a predefined range. In the first mounted state, the feedback information may be output through an external display provided outside a housing portion of the device 900. Visual feedback information may be output by the external display. For example, as illustrated in the device 900 of FIG. 9A, visual feedback information of a smile character indicating that a result of determining, by the device 900, the quality of an image obtained from a camera of the device 900 satisfies a preset criterion of the device 900 may be displayed on the external display of the device 900 and be provided to a user of the device 900.

FIG. 9B is a diagram illustrating a state in which feedback information is displayed on a display of the device 910 in a second mounted state in which an angle formed by a first housing and second housing of the device 910 exceeds a predefined range. In the second mounted state, the feedback information may be output through an internal display provided inside a housing portion of the device 910. Visual feedback information may be output by the internal display. For example, as illustrated in the device 910 of FIG. 9B, visual feedback information of a smile character indicating that a result of determining, by the device 910, the quality of an image obtained from a camera of the device 910 satisfies a preset criterion of the device 910 may be displayed on the internal display of the device 910 and be provided to a user of the device 910.

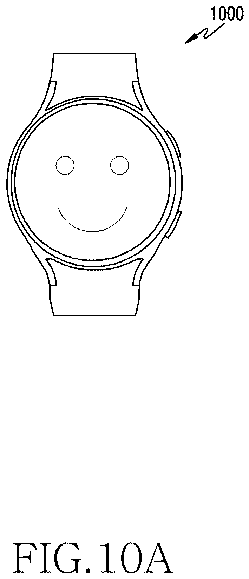

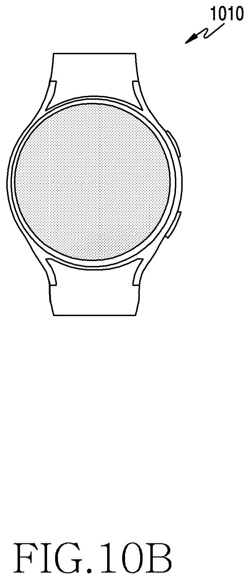

FIGS. 10A and 10B are diagrams illustrating examples of feedback information output through an external electronic device when an image obtained through a camera of an electronic device satisfies a preset criterion of the electronic device, according to an embodiment.

FIG. 10A or 10B is a diagram illustrating an example of outputting feedback information through a smart watch 1000 or 1010, which is one example of the external electronic device 103. The smart watch 1000 of FIG. 10A is a diagram in which a result of determining, by the electronic device 101, the quality of an image obtained from a camera of the electronic device 101 satisfies a preset criterion of the electronic device 101, and thus a smile character is displayed on a display of the smart watch 1000 such that a user of the electronic device 101 may recognize feedback information. The smart watch 1010 of FIG. 10B is a diagram in which a result of determining, by the electronic device 101, the quality of an image obtained from the camera of the electronic device 101 satisfies a preset criterion of the electronic device 101, and thus a blue color is displayed on a display of the smart watch 1010 such that the user of the electronic device 101 may recognize feedback information.

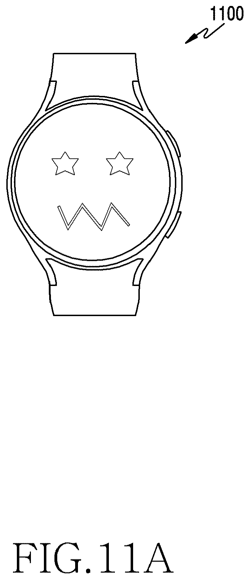

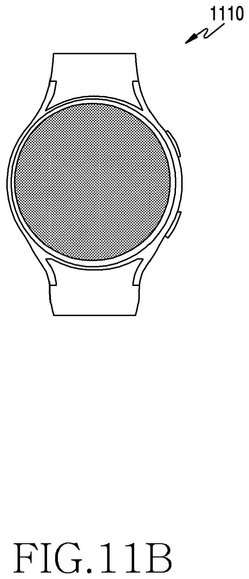

FIGS. 11A and 11B are diagrams illustrating examples of feedback information output through the external electronic device 103 when an image obtained through a camera of an electronic device does not satisfy a preset criterion of the electronic device, according to an embodiment.

FIG. 11A or 11B is a diagram illustrating an example of outputting feedback information through a smart watch 1100 or 1110, which is one example of the external electronic device 103. The smart watch 1100 of FIG. 11A is a diagram in which a result of determining, by the electronic device 101, the quality of an image obtained from a camera of the electronic device 101 does not satisfy a preset criterion of the electronic device 101, and thus a smile character different from the smile character of FIG. 10A is displayed on a display of the smart watch 1100 such that a user of the electronic device 101 may recognize feedback information. The smart watch 1110 of FIG. 11B is a diagram in which a result of determining, by the electronic device 101, the quality of an image obtained from the camera of the electronic device 101 does not satisfy a preset criterion of the electronic device 101, and thus a yellow color is displayed on a display of the smart watch 1110 such that the user of the electronic device 101 may recognize feedback information.

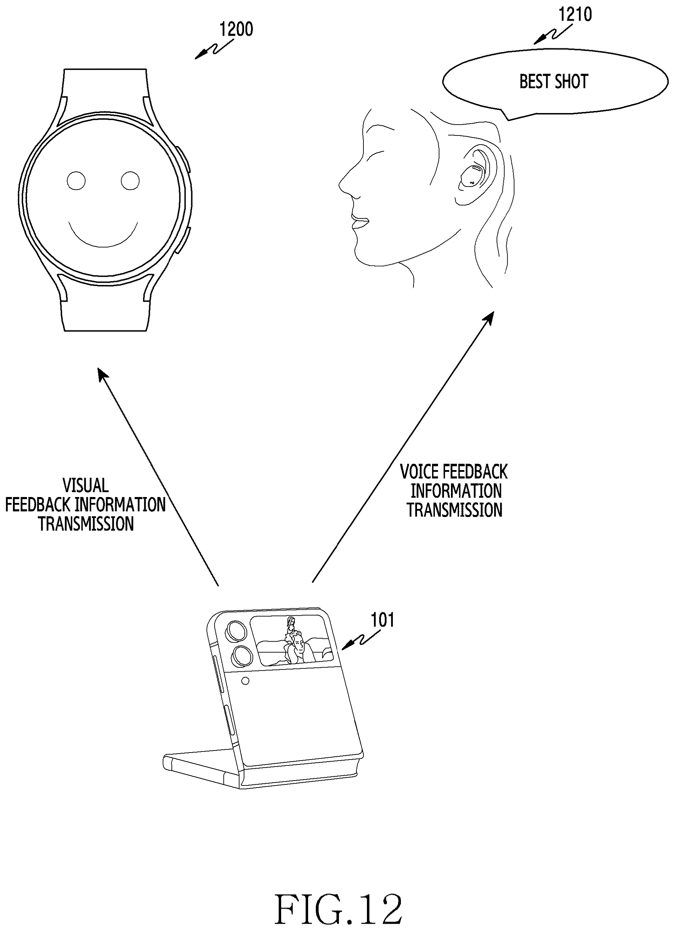

FIG. 12 is a diagram illustrating an example of outputting a plurality of pieces of feedback information to a plurality of feedback output devices when an image obtained through a camera of an electronic device satisfies a preset criterion of the electronic device, according to an embodiment.

FIG. 12 is a diagram illustrating an example of a plurality of pieces of feedback information whose visual feedback information and voice feedback information are transmitted separately to a smart watch 1200 and a wireless earphone 1210, which are examples of feedback output devices. When a user wears or carries both the smart watch 1200 and the wireless earphone 1210, the electronic device 101 may transmit both visual feedback information and voice feedback information to the smart watch 1200 and the wireless earphone 1210 worn or carried by the user respectively, so as to ensure reliable transmission of the feedback information. For example, when it is determined that a result of determining, by the electronic device 101, the quality of the image obtained from the camera satisfies the preset criterion of the electronic device 101, the electronic device 101 may transmit visual feedback information of a smile character to the smart watch 1200, and transmit voice feedback information of "Best shot" to the wireless earphone 1210. The electronic device 101 is not limited to selecting the feedback output device, based on the aforementioned priority, and may also provide the feedback information to a next-priority feedback output device as illustrated in the example of FIG. 12.

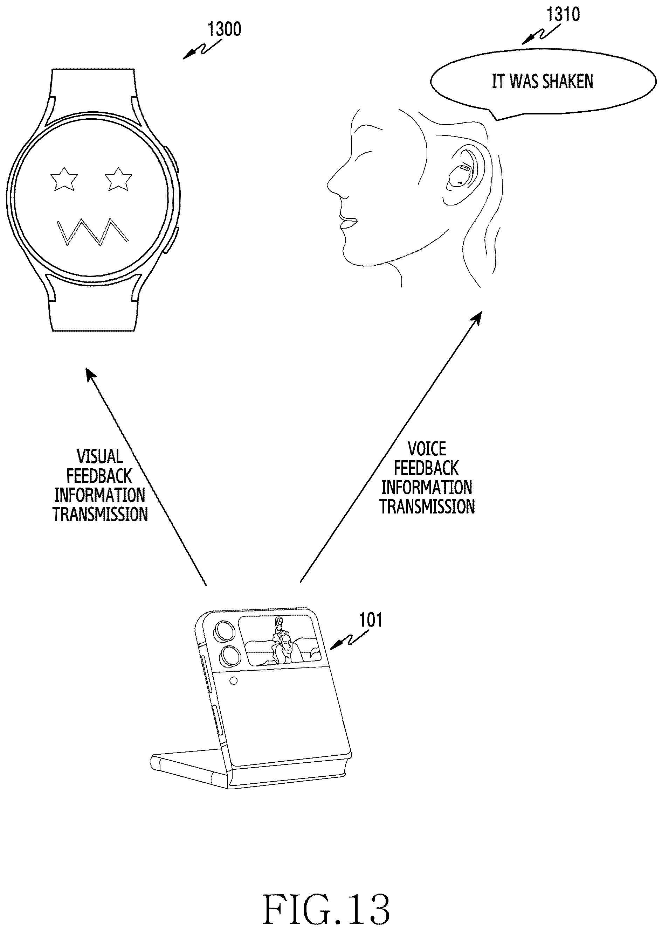

FIG. 13 illustrates an example of outputting a plurality of pieces of feedback information to a plurality of feedback output devices when an image obtained through a camera of an electronic device does not satisfy a preset criterion of the electronic device, according to an embodiment.

FIG. 13 illustrates an example of a plurality of pieces of feedback information whose visual feedback information and voice feedback information are transmitted separately to a smart watch 1300 and a wireless earphone 1310, which are examples of feedback output devices. When a user wears or carries both the smart watch 1300 and the wireless earphone 1310, the electronic device 101 may transmit both visual feedback information and voice feedback information to the smart watch 1300 and the wireless earphone 1310 worn or carried by the user respectively, so as to ensure reliable transmission of the feedback information. For example, when it is determined that a result of determining, by the electronic device 101, the quality of the image obtained from the camera does not satisfy the preset criterion of the electronic device 101, the electronic device 101 may transmit visual feedback information of a smile character different from the smile character of FIG. 12 to the smart watch 1300, and transmit voice feedback information of "It was shaken" to the wireless earphone 1310. The electronic device 101 is not limited to selecting the feedback output device, based on the aforementioned priority, and may also provide the feedback information to a next-priority feedback output device as illustrated in the example of FIG. 13.

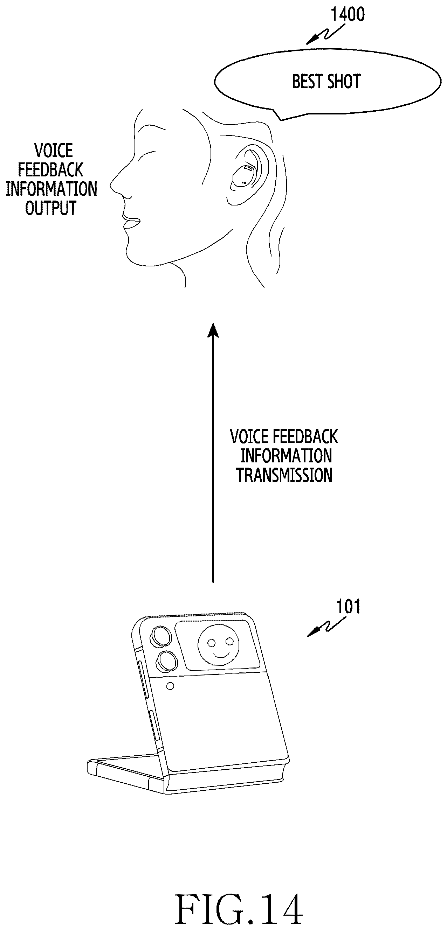

FIG. 14 is a diagram illustrating an example of separately outputting a plurality of pieces of feedback information to a plurality of feedback output devices, according to an embodiment.

FIG. 14 is a diagram illustrating a situation of providing feedback information when only a wireless earphone 1400, which is an example of a feedback output device providing only a sound function, is connected as the external electronic device 103 to the electronic device 101. When a result of determining, by the electronic device 101, the quality of an image obtained from a camera of the electronic device 101 satisfies a preset criterion of the electronic device 101, the electronic device 101 may display visual feedback information of a smile character through a display of the electronic device 101, and may transmit voice feedback information of "Best shot" to the wireless earphone 1400. By receiving the feedback information from both the electronic device 101 and the external electronic device 103, a user of the electronic device 101 may better recognize the feedback information. For example, in a long-distance photographing situation, even when receiving visual feedback information through the display of the electronic device 101, the user may not recognize the visual feedback information and therefore, when also receiving the visual feedback information through the external electronic device 103, the user may receive the visual feedback information twice and thus may compensate for a situation that the user fails to recognize the visual feedback information. The example of FIG. 14 is not also limited to the aforementioned priority and may be an example of selecting variously the feedback output device.

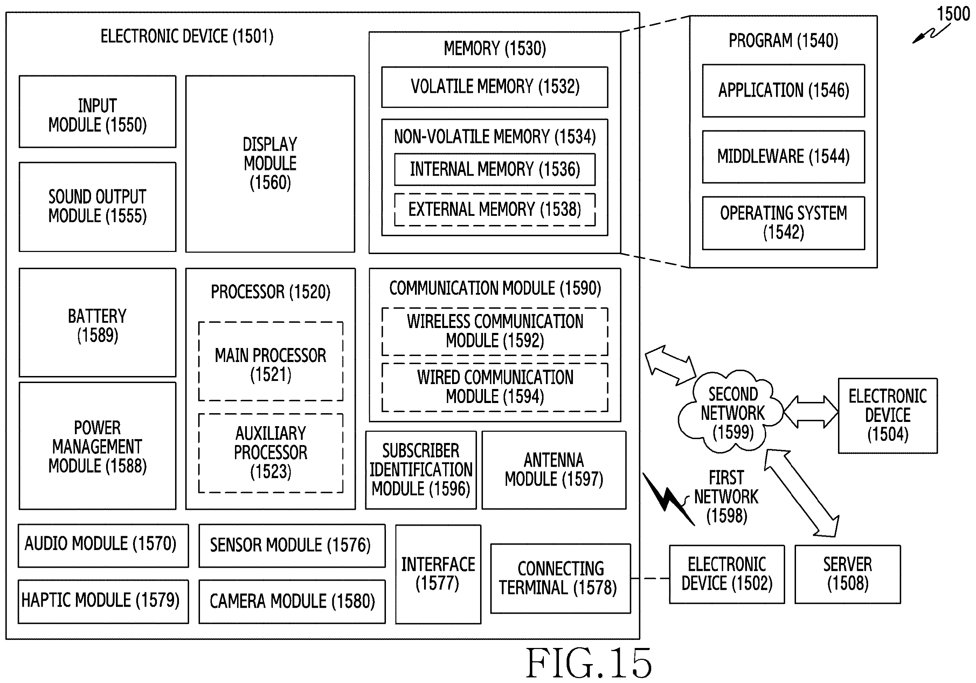

Fig. 15 is a block diagram illustrating an electronic device 1501 in a network environment 1500 according to various embodiments.
Referring to Fig. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module(SIM) 1596, or an antenna module 1597. In some embodiments, at least one of the components (e.g., the connecting terminal 1578) may be omitted from the electronic device 1501, or one or more other components may be added in the electronic device 1501. In some embodiments, some of the components (e.g., the sensor module 1576, the camera module 1580, or the antenna module 1597) may be implemented as a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to one embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thererto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, a HDMI connector, a USB connector, a SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to one embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as BluetoothTM, wireless-fidelity (Wi-Fi) direct, or infrared data association (IrDA)) or the second network 1599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mmWave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element composed of a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In another embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, the electronic device 1501 of FIG. 15 may be the electronic device 101 or the external electronic device 103 of FIGS. 1 to 14.

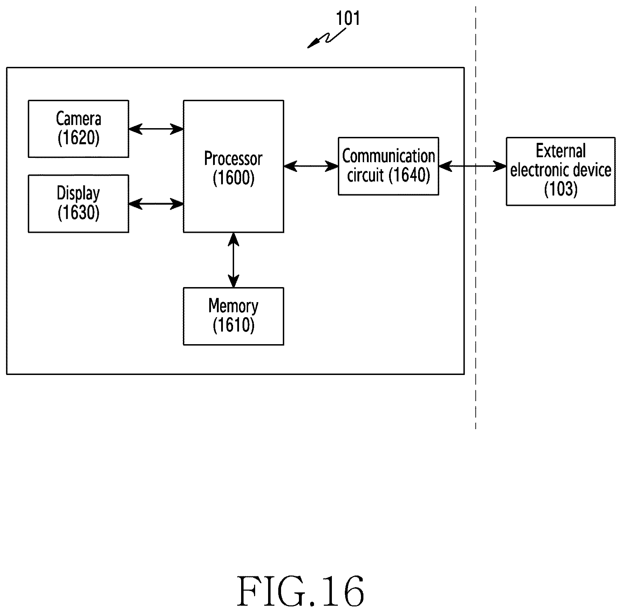

FIG. 16 is a block diagram of an electronic device according to an embodiment.

The electronic device 101 may include a processor 1600, a memory 1610, a camera 1620, a display 1630, and a communication circuit 1640. The memory 1610, the camera 1620, the display 1630, and the communication circuit 1640 may be operatively connected to the processor 1600. The processor 1600 may correspond to the processor 1520 of FIG. 15. The memory 1610 may correspond to the memory 1530 of FIG. 15. The camera 1620 may correspond to the camera module 1580 of FIG. 15. The display 1630 may correspond to the display module 1560 of FIG. 15. The communication circuit 1640 may correspond to the communication module 1590 of FIG. 15.

The memory 1610 may store instructions of enabling the processor 1600 to control the electronic device 101 or control the external electronic device 103. By executing the instructions stored in the memory 1610, the processor 1600 may control the camera 1620 and the display 1630 to obtain an image through the camera 1620 of the electronic device 101 or output feedback information through the display 1630. By executing the instructions stored in the memory 1610, the processor 1600 may control the external electronic device 103 through the communication circuit 1640 or receive a control signal from the external electronic device 103.

By executing the instructions stored in the memory 1610, the processor 1600 may perform the operations of the electronic device 101 illustrated in FIGS. 2 to 4 and FIGS. 6 to 8.

The processor 1600 may obtain an image from the camera 1620. For example, the processor 1600 may obtain a preview image before photographing from the camera 1620 or obtain an image after photographing from the camera 1620. By executing the instructions stored in the memory 1610, the processor 1600 may execute a camera application, and transmit a control signal for adjusting at least one of a focus, composition, or angle of view for a captured image to the camera 1620.

The processor 1600 may display an image captured from the camera 1620 through the display 1630. The electronic device 101 may output feedback information being based on an analysis result of an image obtained from the camera 1620, through the display 1630. For example, the electronic device 101 may display visual feedback information, which is one of a plurality of pieces of feedback information, on the display 1630.

The processor 1600 may identify the external electronic device 103 through the communication circuit 1640. For example, the processor 1600 may identify whether the external electronic device 103 connected to the electronic device 101 exists or whether the connected electronic device 103 is in plurality. The processor 1600 may transmit feedback information to the external electronic device 103 through the communication circuit 1640. The processor 1600 may separately transmit a plurality of pieces of feedback information to a plurality of feedback output devices, based on priorities determined based on a feedback output method of the external electronic device 103 or the characteristics of the external electronic device 103. The processor 1600 may transmit and receive a signal for controlling the external electronic device 103 or allowing the external electronic device 103 to control the electronic device 101, through the communication circuit 1640. The external electronic device 103 may control the electronic device 101 through the communication circuit 1640, based on the received feedback information. For example, the external electronic device 103 may transmit a signal for adjusting a focus of the camera 1620 or re-photographing a subject, to the electronic device 101.

The constructions of the electronic device 101 of FIG. 16 are not limited to the examples described above and may be implemented using various examples of FIGS. 2 to 17.

According to the prior art, an external electronic device connected to an electronic device could check in real time and control a camera preview image, but could not receive feedback information being based on an analysis result of an image captured by the electronic device or a preview image before photographing. Therefore, according to an embodiment of the disclosure, a user who takes long-distance photographing may receive a feedback of an image at a long distance without needing to check a resultant image directly on the electronic device before or after photographing.

In addition, according to an embodiment of the disclosure, when the worn external electronic device is in plurality, feedback information may be transmitted to the external electronic devices, based on priorities being based on a feedback output method of the plurality of external electronic devices, for the sake of efficient feedback transmission.

According to an embodiment of the disclosure, a method for providing feedback information for remote photographing in a foldable electronic device may include the operation of executing a camera application for photographing a subject through at least one camera of the foldable electronic device, may include the operation of identifying whether a shaking state of the foldable electronic device is a stable state while a folding angle of the foldable electronic device is within a predefined angle range, may include the operation of when the shaking state of the foldable electronic device is the stable state, analyzing an image obtained through the at least one camera and determining the quality of the image, may include the operation of identifying at least one other electronic device connected to the foldable electronic device through short-range wireless communication, may include the operation of generating feedback information about the image, based on a result of determining the quality, may include the operation of when the at least one other electronic device is identified, selecting at least one feedback output device to output the feedback information from among the at least one other electronic device and the operation of transmitting the feedback information to the selected at least one feedback output device, and may include the operation of when the at least one other electronic device is not identified, outputting the feedback information through the foldable electronic device.

According to an embodiment of the disclosure, a method for providing feedback information for remote photographing in a foldable electronic device may further include the operation of identifying that the foldable electronic device is spaced apart from a subject by a predefined distance. The operation of determining the quality of an image obtained through a camera may be determining the quality of the image obtained through the camera when identifying that the foldable electronic device is spaced apart from the subject by the predefined distance.

According to an embodiment of the disclosure, in a method for providing feedback information for remote photographing in a foldable electronic device, the operation of identifying that the foldable electronic device is spaced apart from a subject by a predefined distance may be identifying that the foldable electronic device is spaced apart from the subject by the predefined distance, based on a ratio occupied by the subject within an image obtained through a camera.

According to an embodiment of the disclosure, in a method for providing feedback information for remote photographing in a foldable electronic device, the operation of selecting at least one feedback output device may be selecting the at least one feedback output device from among at least one other electronic device, based on a priority being based on the type of the at least one other electronic device.

According to an embodiment of the disclosure, in a method for providing feedback information for remote photographing in a foldable electronic device, the feedback information may include a plurality of types of feedback information. The plurality of types of feedback information may include visual feedback information, voice feedback information, and vibration feedback information.

According to an embodiment of the disclosure, a method for providing feedback information for remote photographing in a foldable electronic device may, when at least one feedback output device is selected, separately transmit a plurality of types of feedback information to the selected at least one feedback output device.

According to an embodiment of the disclosure, in a method for providing feedback information for remote photographing in a foldable electronic device, the operation of transmitting the feedback information to at least one feedback output device may be transmitting a portion of the feedback information to the at least one feedback output device, and outputting another portion of the feedback information through the foldable electronic device.

According to an embodiment of the disclosure, in a method for providing feedback information for remote photographing in a foldable electronic device, at least one feedback output device may include a wearable electronic device. The operation of transmitting the feedback information to a selected at least one feedback output device may be based on whether the wearable electronic device has been worn by a user.

According to an embodiment of the disclosure, in a method for providing feedback information for remote photographing in a foldable electronic device, an image obtained through a camera may include a preview image. The feedback information may include information about whether at least one of a focus, composition or angle of view of the preview image satisfies a preset criterion of the foldable electronic device.

According to an embodiment of the disclosure, in a method for providing feedback information for remote photographing in a foldable electronic device, an image obtained through a camera may include a captured image. The feedback information may include information about whether a state of a subject in the captured image satisfies a preset criterion of the foldable electronic device.

According to an embodiment of the disclosure, a foldable electronic device for providing feedback information for remote photographing may include at least one camera, a memory, a wireless communication circuit, and at least one processor operatively connected to the camera, the memory and the wireless communication circuit. By executing instructions stored in the memory, the at least one processor may execute a camera application for photographing a subject through the at least one camera of the foldable electronic device, may identify whether a shaking state of the foldable electronic device is a stable state while a folding angle of the foldable electronic device is within a predefined angle range, may analyze an image obtained through the at least one camera and determine the quality of the image when the shaking state of the foldable electronic device is the stable state, may identify at least one other electronic device connected to the foldable electronic device through short-range wireless communication that uses the wireless communication circuit of the foldable electronic device, may generate feedback information about the image, based on a result of determining the quality, may select at least one feedback output device to output the feedback information from among the at least one other electronic device when the at least one other electronic device is identified, may transmit the feedback information to the selected at least one feedback output device, and may output the feedback information through the foldable electronic device when the at least one other electronic device is not identified.

According to an embodiment of the disclosure, in a foldable electronic device for providing feedback information for remote photographing, at least one processor may identify that the foldable electronic device is spaced apart from a subject by a predefined distance. Determining, by the at least one processor, the quality of an image obtained through a camera may be determining the quality of the image obtained through the camera when identifying that the foldable electronic device is spaced apart from the subject by the predefined distance.

According to an embodiment of the disclosure, in a foldable electronic device for providing feedback information for remote photographing, identifying, by at least one processor, that the foldable electronic device is spaced apart from a subject by a predefined distance may be identifying that the foldable electronic device is spaced apart from the subject by the predefined distance, based on a ratio occupied by the subject within an image obtained through a camera.

According to an embodiment of the disclosure, in a foldable electronic device for providing feedback information for remote photographing, selecting, by at least one processor, at least one feedback output device may be selecting the at least one feedback output device from among at least one other electronic device, based on a priority being based on the type of the at least one other electronic device.

According to an embodiment of the disclosure, in a foldable electronic device for providing feedback information for remote photographing, the feedback information may include a plurality of types of feedback information. The plurality of types of feedback information may include visual feedback information, voice feedback information, and vibration feedback information.

According to an embodiment of the disclosure, in a foldable electronic device for providing feedback information for remote photographing, when at least one feedback output device is selected, at least one processor may separately transmit a plurality of types of feedback information to the selected at least one feedback output device.

According to an embodiment of the disclosure, in a foldable electronic device for providing feedback information for remote photographing, transmitting, by at least one processor, the feedback information to at least one feedback output device may be transmitting a portion of the feedback information to the at least one feedback output device, and outputting another portion of the feedback information through the foldable electronic device.

According to an embodiment of the disclosure, in a foldable electronic device for providing feedback information for remote photographing, at least one feedback output device may include a wearable electronic device. Transmitting, by at least one processor, the feedback information to the selected at least one feedback output device may be based on whether the wearable electronic device has been worn by a user.

According to an embodiment of the disclosure, in a foldable electronic device for providing feedback information for remote photographing, an image obtained through a camera may include a preview image. The feedback information may include information about whether at least one of a focus, composition, or field of view of the preview image satisfies a preset criterion of the foldable electronic device.

According to an embodiment of the disclosure, in a foldable electronic device for providing feedback information for remote photographing, an image obtained through a camera may include a captured image. The feedback information may include information about whether a state of a subject in the captured image satisfies a preset criterion of the foldable electronic device.

According to an embodiment of the disclosure, a method for providing feedback information for remote photographing in a foldable electronic device may provide intuitive and efficient feedback information about an image obtained through a camera to a user, by providing feedback information about an image after subject photographing or a preview image before subject photographing to an external electronic device or a foldable electronic device even in a situation where a user performs remote photographing.

According to an embodiment of the disclosure, a method for providing feedback information for remote photographing in a foldable electronic device may enable more efficient remote photographing, by outputting feedback information to an external electronic device more suitable for providing feedback information among a plurality of external electronic devices worn by a user, based on a priority determined based on a feedback information output method of the external electronic device, in a situation where a user wears the plurality of external electronic devices.

In addition, various effects directly or indirectly recognized through disclosure may be provided.

## Claims

1. A method for providing feedback information for remote photographing in a foldable electronic device, the method comprising:
executing a camera application for photographing a subject through at least one camera of the foldable electronic device;
identifying whether a shaking state of the foldable electronic device is a stable state while a folding angle of the foldable electronic device is within a predefined angle range;
when the shaking state of the foldable electronic device is the stable state, analyzing an image obtained through the at least one camera and determining the quality of the image;
identifying at least one other electronic device connected to the foldable electronic device through short-range wireless communication;
generating feedback information about the image, based on a result of determining the quality;
when the at least one other electronic device is identified, selecting at least one feedback output device to output the feedback information from among the at least one other electronic device;
transmitting the feedback information to the selected at least one feedback output device; and
when the at least one other electronic device is not identified, outputting the feedback information through the foldable electronic device.

2. The method of claim 1, further comprising identifying that the foldable electronic device is spaced apart from the subject by a predefined distance,
wherein determining the quality of the image obtained through the camera is determining the quality of the image obtained through the camera, when identifying that the foldable electronic device is spaced apart from the subject by the predefined distance.

3. The method of claim 2, wherein identifying that the foldable electronic device is spaced apart from the subject by the predefined distance is
identifying that the foldable electronic device is spaced apart from the subject by the predefined distance, based on a ratio of an area occupied by the subject to a total area of the image obtained through the camera.

4. The method of claim 1, wherein selecting the at least one feedback output device is
selecting the at least one feedback output device from among the at least one other electronic device, based on a priority being based on the type of the at least one other electronic device.

5. The method of claim 1, wherein transmitting the feedback information to the at least one feedback output device is transmitting a portion of the feedback information to the at least one feedback output device, and outputting another portion of the feedback information through the foldable electronic device.

6. The method of claim 1, wherein the image obtained through the camera comprises a captured image, and
the feedback information comprises information about whether a state of the subject in the captured image satisfies a preset criterion of the foldable electronic device.

7. A foldable electronic device for providing feedback information for remote photographing, comprising:
at least one camera;
a memory;
a wireless communication circuit; and
at least one processor,
wherein, when executed by the at least one processor, instructions stored in the memory allow the electronic device to:
execute a camera application for photographing a subject through the at least one camera of the foldable electronic device;
identify whether a shaking state of the foldable electronic device is a stable state while a folding angle of the foldable electronic device is within a predefined angle range;
when the shaking state of the foldable electronic device is the stable state, analyze an image obtained through the at least one camera and determine the quality of the image;
identify at least one other electronic device connected to the foldable electronic device through short-range wireless communication that uses the wireless communication circuit of the foldable electronic device;
generate feedback information about the image, based on a result of determining the quality;
when the at least one other electronic device is identified, select at least one feedback output device to output the feedback information from among the at least one other electronic device;
transmit the feedback information to the selected at least one feedback output device; and
when the at least one other electronic device is not identified, output the feedback information through the foldable electronic device.

8. The foldable electronic device of claim 7, wherein, when executed by the at least one processor, the instructions allow the foldable electronic device to
identify that the foldable electronic device is spaced apart from the subject by a predefined distance,
wherein determining the quality of the image obtained through the camera is determining the quality of the image obtained through the camera when identifying that the foldable electronic device is spaced apart from the subject by the predefined distance.

9. The foldable electronic device of claim 8, wherein, when executed by the at least one processor, the instructions allow the foldable electronic device to
identify that the foldable electronic device is spaced apart from the subject by the predefined distance, based on a ratio occupied by the subject within the image obtained through the camera.

10. The foldable electronic device of claim 7, wherein, when executed by the at least one processor, the instructions allow the foldable electronic device to
select the at least one feedback output device from among the at least one other electronic device, based on a priority being based on the type of the at least one other electronic device.

11. The foldable electronic device of claim 10, wherein the feedback information comprises a plurality of types of feedback information, and
the plurality of types of feedback information comprise visual feedback information, voice feedback information, and vibration feedback information.

12. The foldable electronic device of claim 11, wherein, when executed by the at least one processor, the instructions allow the foldable electronic device to
when the at least one feedback output device is selected, separately transmit the plurality of types of feedback information to the selected at least one feedback output device.

13. The foldable electronic device of claim 7, wherein, when executed by the at least one processor, the instructions allow the foldable electronic device to:
when transmitting the feedback information to the at least one feedback output device,
transmit a portion of the feedback information to the at least one feedback output device; and
output another portion of the feedback information through the foldable electronic device.

14. The foldable electronic device of claim 7, wherein the image obtained through the camera comprises a preview image, and
the feedback information comprises information about whether at least one of a focus, composition, or field of view of the preview image satisfies a preset criterion of the foldable electronic device.

15. The foldable electronic device of claim 7, wherein the image obtained through the camera comprises a captured image, and
the feedback information comprises information about whether a state of the subject in the captured image satisfies a preset criterion of the foldable electronic device.
